(19) Europäisches Patentamt
European Patent Office
Office européen des brevets

(11) **EP 2 710 742 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(21) Anmeldenummer: **12721838.6**

(22) Anmeldetag: **15.05.2012**

(51) Int Cl.:
**H04B 1/10** (2006.01)    **H04B 1/28** (2006.01)

(86) Internationale Anmeldenummer:
**PCT/EP2012/059034**

(87) Internationale Veröffentlichungsnummer:
**WO 2012/156409 (22.11.2012 Gazette 2012/47)**

(54) **VORRICHTUNG UND VERFAHREN ZUR ADAPTIVEN UNTERDRÜCKUNG VON IN-BAND-STÖRSIGNALEN BEI FUNK-EMPFÄNGERN**

DEVICE AND METHOD FOR ADAPTIVELY SUPPRESSING IN-BAND INTERFERENCE SIGNALS IN RADIO RECEIVERS

DISPOSITIF ET PROCÉDÉ DESTINÉS À L'ANNULATION ADAPTIVE DE SIGNAUX PERTURBATEURS EN BANDE CHEZ DES RÉCEPTEURS RADIO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2011 DE 102011075893**

(43) Veröffentlichungstag der Anmeldung:
**26.03.2014 Patentblatt 2014/13**

(73) Patentinhaber: **Continental Automotive GmbH 30165 Hannover (DE)**

(72) Erfinder:
• **AUNKOFER, Markus 93326 Abensberg (DE)**
• **OPITZ, Martin 93049 Regensburg (DE)**
• **REISINGER, Thomas 93128 Regenstauf (DE)**

(56) Entgegenhaltungen:
**EP-A2- 0 372 369    US-A1- 2002 054 651**

EP 2 710 742 B1

**Beschreibung**

Die vorliegende Erfindung betrifft die Unterdrückung von Störsignalen im Nutzsignalband bei Funkempfängern.

Häufig werden in Funkempfängern schmalbandige Störsignale mit Hilfe von Bandsperrfiltern unterdrückt. Schmalbandige Bandsperrfilter werden auch als Kerbfilter oder Notch-Filter bezeichnet. Insbesondere bei Bandspreiz-Übertragungsverfahren (auch: Spread-Spectrum-Übertragungsverfahren) können Notch-Filter (z.B. in einem DSSS-Empfänger, DSSS = Direct Sequence Spread Spectrum) zum Unterdrücken schmalbandiger Störsignale eingesetzt werden. Aufgrund der Frequenzspreizung des Nutzsignals hat eine schmalbandige "Kerbe" im (gespreizten) Nutzsignal keine wesentliche Auswirkung auf das Nutzsignal nach der Entspreizung.

Die Frequenz eines Störsignals ist a priori nicht bekannt. Da eine breitbandige Filterung das Nutzsignal unbrauchbar machen würde, kommt nur eine schmalbandige Filterung in Betracht. Dazu kann die Frequenz des Störsignals ermittelt und der Frequenzgang des Notch-Filters entsprechend adaptiert werden, sodass der (schmalbandige) Sperrbereich des Notch-Filters das Störsignal trifft. Derartige Funkempfänger samt Notch-Filtern mit adaptiv anpassbarem Sperrbereich sind z.B. aus der amerikanischen Patentschrift US 7,706,769 bekannt. Notch-Filter mit (entsprechend einer Vorgabe) anpassbarem Sperrbereich sind jedoch aufwändig zu implementieren.

Aus der Druckschrift EP 0 372 369 A2 ist eine Schaltungsanordnung zur Unterdrückung schmalbandiger Störsignale unter Verwendung eines Kerbfilters mit festem Sperrbereich bekannt. Anstatt den Sperrbereich anzupassen wird hier ein Zwischenfrequenzsignal derart angepasst, dass die Frequenz des Störsignals der Resonanzfrequenz des Kerbfilters entspricht.

Die Druckschrift US 2002/054651 A1 beschreibt eine Vorrichtung und ein Verfahren zur Verminderung der Amplitude von Signalen, insbesondere in einem Empfänger für ein drahtloses Telekommunikationsnetz.

Der Erfindung liegt die Aufgabe zugrunde, für die Anwendung in Funkempfängern eine Anordnung und ein Verfahren zur adaptiven Unterdrückung von In-Band-Störsignalen zu schaffen, die mit möglichst wenig (Hard- und Software-) Aufwand realisierbar sind.

Diese Aufgabe wird durch eine Vorrichtung gemäß Anspruch 1 sowie durch ein Verfahren gemäß Anspruch 6 gelöst. Ausgestaltungen und Weiterentwicklungen des Erfindungsgedankens sind Gegenstand von abhängigen Ansprüchen.

Der Gegenstand der Erfindung ist in den Ansprüchen definiert. Es wird eine Schaltungsanordnung zur adaptiven (anpassbaren) Unterdrückung von Störsignalen beschrieben. Die Schaltungsanordnung weist einen ersten Lokaloszillator zur Erzeugung eines ersten Lokaloszillatorsignals und einen zweiten Lokaloszillator zur Erzeugung eines zweiten Lokaloszillatorsignals mit jeweils einstellbarer Frequenz auf. Die Schaltungsanordnung umfasst weiter einen ersten Mischer zum Umsetzen eines Hochfrequenzsignals in ein korrespondierendes Zwischenfrequenzsignal nach Maßgabe des ersten Lokaloszillatorsignals und einen zweiten Mischer zum Umsetzen des Zwischenfrequenzsignals in ein korrespondierendes Basisbandsignal nach Maßgabe des zweiten Lokaloszillatorsignals. Schließlich umfasst die Schaltungsanordnung ein Notch-Filter mit einem fest definierten Sperrbereich. Eine Steuereinheit ist dazu ausgebildet, die Frequenz eines in dem Zwischenfrequenzsignal enthaltenen Störsignals zu schätzen und die Frequenz der Lokaloszillatorsignale derart an die geschätzte Frequenz $f_S$ des Störsignals anzupassen, dass die Frequenz $f_S$ des Störsignals in den Sperrbereich des Notch-Filters umgesetzt wird.

Des Weiteren wird ein Verfahren zum Unterdrücken eines Störsignals in einem Nutzsignal sowie ein Funkempfänger offenbart, in dem die oben genannte Schaltungsanordnung zur Anwendung kommt.

Die Erfindung wird im Folgenden anhand von Abbildungen näher erläutert, wobei gleiche Komponenten mit denselben Bezugszeichen versehen sind. Es zeigt:

Figur 1     in einem Blockschaltbild eine Schaltungsanordnung zur adaptiv anpassbaren Unterdrückung von Störsignalen mit einem Notch-Filter, der im Zwischenfrequenzbereich arbeitet;

Figur 2     in einem Blockschaltbild eine Steuerschaltung zur Verwendung bei der Schaltungsanordnung nach Figur 1;

Figur 3     in einem Blockschaltbild die Schaltungsanordnung aus Figur 1, jedoch mit teilweiser digitaler Implementierung;

Figur 4     in einem Ablaufdiagramm ein Verfahren zum Empfang von Funksignalen, bei dem adaptiv schmalbandige Störsignale unterdrückt werden; und

Fig. 5     zeigt beispielhaft die Wirkung der Erfindung anhand von Diagrammen, welche die Spektren von Nutzsignal und Störsignal im Hochfrequenzband, im Zwischenfrequenzband und im Basisband darstellen.

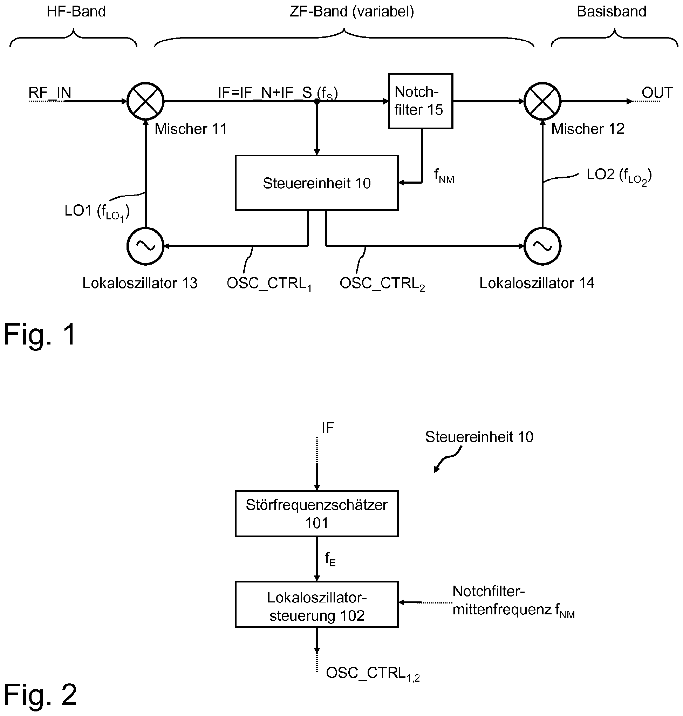

Figur 1 zeigt eine vereinfacht dargestellte, beispielhafte Schaltungsanordnung zur adaptiven (anpassbaren) Unterdrückung von Störsignalen mit Hilfe eines Notch-Filters. Eine derartige Schaltungsanordnung kann beispielsweise in einem Funkempfänger (insbesondere in dessen Hochfrequenz-Frontend- Einheit) wie beispielsweise in Empfängern von schlüssellosen Zugangssystemen zum Einsatz kommen.

Ein beispielsweise von einer Empfangsantenne oder einem Richtkoppler stammendes Hochfrequenz-Eingangssignal RF_IN (im Folgenden auch als HF-Signal RF_IN bezeichnet) wird einem Eingang eines ersten Mischers 11 zugeführt. Ein erster Lokaloszillator 13 erzeugt das für den Betrieb des Mischers notwendige Lokaloszillatorsignal LO1 mit einstellbarer Frequenz $f_{LO1}$. Der Mischer 11 setzt das Hochfrequenzsignal RF_IN in ein Zwischenfrequenzsignal (ZF-Signal) IF um. Dieses Zwischenfrequenzsignal IF liegt in einem anderen, meist tiefer liegendem Frequenzband (Zwischenfrequenzband = ZF-Band) als das Hochfrequenzsignal. Dabei wird das Spektrum des in dem Hochfrequenzsignal RE_IN enthaltenen Nutzsignals möglichst nur verschoben, jedoch nicht verändert, um die in dem Nutzsignal enthaltene Information nicht zu verlieren. Der Betrag dieser Frequenzverschiebung wird durch die Frequenz $f_{LO1}$ des Lokaloszillatorsignals LO1, welches neben dem Hochfrequenzsignal RF_IN dem Mischer 11 zugeführt ist, bestimmt. In der Regel wird die spektrale Lage des Zwischenfrequenzsignals mit dem Schaltungskonzept festgelegt. Im vorliegenden Beispiel ist die Frequenz $f_{LO1}$ des Lokaloszillatorsignals LO1 einstellbar, und folglich kann durch Variation der Frequenz $f_{LO1}$ des entsprechenden Lokaloszillators 13 die spektrale Lage ZF-Bands eingestellt werden. Die Bandbreite des Zwischenfrequenzsignals muss zumindest das Spektrum des Nutzsignals abdecken, sie kann aber auch deutlich breiter sein als die Bandbreite eines einzelnen Nutzsignals, um beispielsweise mehrere Kanäle parallel in dem Zwischenfrequenzband (z.B. digital) verarbeiten zu können.

Das Zwischenfrequenzsignal IF wird mit Hilfe eines zweiten Mischers 12 und eines von einem zweiten Lokaloszillator 14 erzeugten zweiten Lokaloszillatorsignals LO2 mit einer Frequenz $f_{LO2}$ in ein Basisband umgesetzt mit einem resultierenden Basisbandsignal OUT zur weiteren Verarbeitung durch nachfolgendes Einheiten. Beispielsweise findet bei der Verwendung eines DSSS-Übertragungsverfahrens (DSSS = Direct Sequence Spread Spectrum) im Basisband die Entspreizung des senderseitig vor der Übertragung gespreizten Signals statt.

Im Zwischenfrequenzband kann eine Signalvorverarbeitung erfolgen, insbesondere kann das Zwischenfrequenzsignal IF gefiltert werden. Um beispielsweise ein schmalbandiges Störsignal IF_S, das neben einem Nutzsignal IF_N im Zwischenfrequenzsignal IF auftritt (IF=IF_N+IF_S), mit einer Mittenfrequenz $f_S$ zu unterdrücken, kann das Zwischenfrequenzsignal IF mit Hilfe eines Notch-Filters 15 gefiltert werden. Das Störsignal IF_S wird genau dann unterdrückt, wenn seine Frequenz $f_S$ im Sperrbereich) des Notch-Filters 15 liegt. Dazu sollte die spektrale Lage des Sperrbereichs an die Frequenz $f_S$ des Störsignals adaptiert werden. Die Frequenz $f_S$ des Störsignals IF_S ist a priori nicht bekannt, oder kann variieren. Gemäß dem in Figur 1 dargestellten Beispiel wird jedoch ein einfach zu implementierendes Notch-Filter 15 mit fest vorgegebener Charakteristik, d. h. fester Sperrbereichsmittenfrequenz verwendet, d.h.

die spektrale Lage des Sperrbereichs ist fest vorgegeben und nicht veränderbar. Statt die Filtercharakteristik des Notch-Filters 15 anzupassen, wird mit Hilfe des ersten Mischers 11 das Zwischenfrequenzsignal IF und damit auch ein eventuell darin enthaltenes Störsignal IF_S derart in der Frequenz verschoben, dass die Frequenz $f_S$ des im Zwischenfrequenzsignals IF enthaltenen Störsignals IF_S genau im Sperrbereich des Notch-Filters 15 zu liegen kommt. Das im Zwischenfrequenzsignal IF enthaltene Störsignal IF_S kann also durch Variieren des dem Mischer 11 zugeführten Lokaloszillatorsignals LO1 in der Frequenz verschoben werden.

Dazu wird beispielsweise eine Steuereinheit 10 vorgesehen, der das Zwischenfrequenzsignal IF zugeführt wird und die dazu ausgebildet ist, basierend auf dem Zwischenfrequenzsignal IF die Frequenz $f_S$ des im Zwischenfrequenzsignal IF enthaltenen Störsignals IF_S zu schätzen, eine geschätzte Störsignalfrequenz $f_S'$ ergebend. Liegt die geschätzte Frequenz $f_S'$ des Störsignals außerhalb des Sperrbereichs des Notch-Filters 15, dann wird das erste Lokaloszillatorsignal LO1 entsprechend angepasst, um das Zwischenfrequenzsignal IF zu verschieben. Zudem ist eine korrespondierende Anpassung des zweiten Lokaloszillatorsignals LO2 vorgesehen, um die gesamte Frequenzverschiebung vom Hochfrequenzband (HF-Band) in das Basisband konstant zu halten. Diese Anpassung der Lokaloszillatorsignale erfolgt in dem vorliegenden Beispiel mit Hilfe der Steuersignale OSC_CTRL$_1$ bzw. OSC_CTRL$_2$.

In Figur 2 ist die bei der Anordnung nach Figur 1 beispielhaft verwendete Steuereinheit 10 detaillierter dargestellt. Die Steuereinheit 10 umfasst zumindest einen Frequenzschätzer 101 und eine Lokaloszillatorsteuerung 102. Der Frequenzschätzer 101 ist dazu ausgebildet, aus dem Zwischenfrequenzsignal IF die Frequenz $f_S$ des eventuell vorhandenen Störsignals IF_S zu schätzen. Die Frequenzdifferenz $f_E$ zwischen der geschätzten Störsignalfrequenz $f_S'$ und der Mittenfrequenz $f_{NM}$ des Sperrbereichs des Notch-Filters 15 ist jener Wert, um den die Schwingfrequenz $f_{LO1}$ des ersten Lokaloszillatorsignals LO1 ($f_E = f_S' - f_{NM}$) korrigiert werden müsste, damit die Störsignalfrequenz $f_S$ genau in der Mitte des Sperrbereichs des Notch-Filters 15 liegt und somit maximal gedämpft wird. Das heißt, wenn die Störsignalfrequenz $f_S$ genau (oder mit bestimmter Toleranz) in der Mitte des Sperrbereichs des Notch-Filters 15 liegt, ist die Frequenzdifferenz $f_E$ null. Geeignete Methoden zur Schätzung der Störsignalfrequenz $f_S$ bzw. des Frequenzdifferenz $f_E$ sind hinreichend bekannt.

Mit Hilfe des Frequenzschätzers 101 kann also direkt oder indirekt die Abweichung in Form der Frequenzdifferenz $f_E$ der Störsignalfrequenz $f_S$ von der Mittenfrequenz $f_{NM}$ des Sperrbereichs des Notch-Filters 15 ermittelt werden. Die Lokaloszillatorsteuerung 102 ist dazu ausgebildet, die aktuellen Lokaloszillatorfrequenzen $f_{LO1}$ und $f_{LO2}$ der beiden Lokaloszillatoren 13 und 14 entsprechend der geschätzten Frequenzdifferenz $f_E$ zu adaptieren. Das heißt, die Frequenz $f_{LO1}$ des ersten Lokaloszillatorsignals LO1 wird um die geschätzte Frequenzdifferenz $f_E$ erhöht und die Frequenz $f_{LO2}$ des zweiten Lokaloszillatorsignals LO2 wird um die geschätzte Frequenzdifferenz $f_E$ reduziert. Nach dieser Anpassung liegt die Störsignalfrequenz $f_S$ genau in der Mitte des Sperrbereichs des Notch-Filters 15 und das Störsignal IF_S wird bestmöglich unterdrückt.

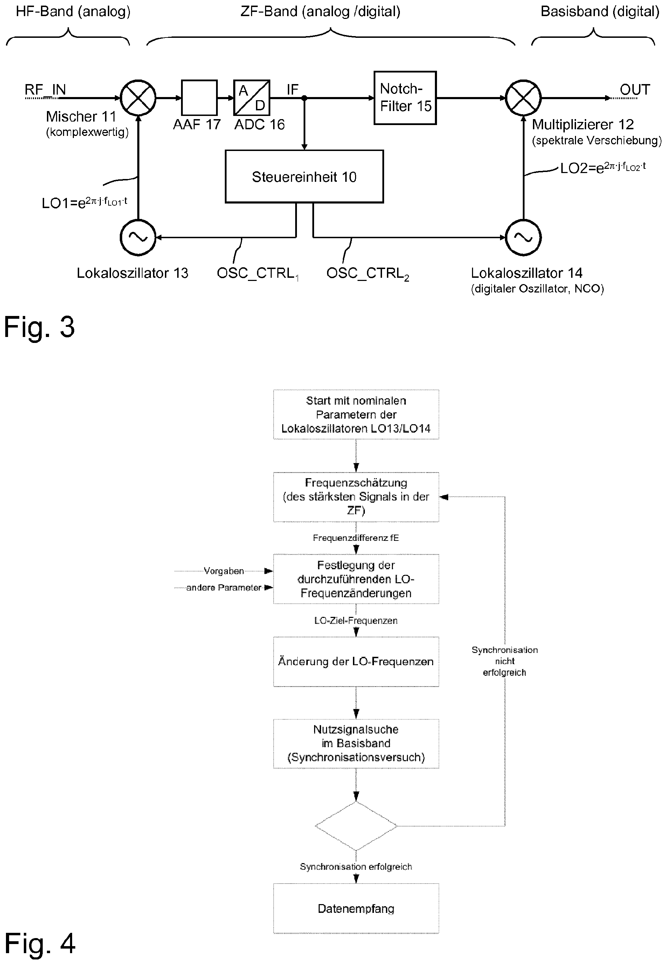

Dabei können Teile der in Figur 1 dargestellten Schaltungsanordnung mit Hilfe eines Systems zur digitalen Signalverarbeitung implementiert sein. Ein Beispiel hierfür ist in Figur 3 gezeigt. Die in Figur 3 dargestellte Anordnung entspricht in der grundlegenden Funktion der aus Figur 1 mit dem Unterschied, dass (in Signalflussrichtung) nach dem ersten Mischer 11 eine Digitalisierung des Zwischenfrequenzsignals IF mittels Analog-Digital-Wandler 16 vorgenommen wird und die restliche Signalverarbeitung beispielsweise mit Hilfe eines digitalen Signalprozessors und entsprechender Software ausgeführt wird. Zumindest das Notch-Filter 15 und die Steuereinheit 10 sind also digital realisiert. Des Weiteren ist auch der zweite Mischer 12 als digitale Multiplikation (zur spektralen Verschiebung des Zwischenfrequenzsignals IF ins Basisband) des gefilterten Zwischenfrequenzsignals IF mit dem zweiten Lokaloszillatorsignal LO2 implementiert. Das zweite Lokaloszillatorsignal LO2 wird dabei beispielsweise von einem sogenannten NCO (Numerically Controlled Oscillator), also einem digitalen Oszillator erzeugt.

In den Darstellungen der Figuren 1 und 2 wurden der Einfachheit halber Komponenten, die für die Erläuterung der Funktionsweise der Schaltungsanordnung nicht notwendig sind, weggelassen, können aber in geeigneter Weise beliebig hinzugefügt werden, wie z.B. Verstärker, Anti-Aliasing-Filter, Abtastraten-Umsetzer, weitere Filter, etc.

Das Notch-Filter 15 kann auch als Kombination mehrerer Teil-Filter implementiert sein. In dem Beispiel aus Fig. 3 könnte ein Teil der Filterübertragungsfunktion des Notch-Filters 15 auch in Form eines Analogfilters implementiert sein. Insbesondere könnte die Übertragungsfunktion eines dem Analog-Digital-Wandler 16 vorgeschalteten Anti-Aliasing-Filters so gewählt werden, dass dieses (auch) als Notch-Filter arbeitet. Je nach der für die Realisierung gewählten Technologie kann das Notch-Filter auch vollständig analog implementiert werden. Bei einer rein digitalen Implementierung können beispielsweise im digitalen Signalverarbeitungspfad eines Empfängers ohnehin verwendete Filterübertragungsfunktionen derart modifiziert werden, dass die gewünschte Notch-Filterübertragungsfunktion realisiert wird. Ein für den Abgleich von Betrags- und Phasenfehlern zwischen den Inphase- und Quadratursignalkomponenten ohnehin vorhandenes Filter könnten z.B. für diesen Zweck verwendet werden. Im einfachsten Fall ist das Notch-Filter ein einfacher Hochpass (für den Fall, dass das Störsignal auf die Frequenz Null gemischt wird), der auch als DC-Notch-Filter bezeichnet werden kann. Optional kann das Notch-Filter während der Frequenz-Schätzung deaktiviert werden, um zu vermeiden, dass Störsignale während der Schätzung verdeckt werden.

Für die eigentliche Frequenzschätzung sind verschiedene Methoden bekannt. Ein erwartungstreuer Minimum-Varianz-Schätzer für die Störsignalfrequenz ist beispielsweise

$$f_S' = \frac{f_S}{2\pi} \sum_{k=1}^{L_0-1} \gamma(k) \arg\{z(k)z^*(k)\}, \quad (1)$$

wobei die Glättungsfunktion $\gamma(k)$ wie folgt berechnet wird:

$$\gamma(k) = \frac{3}{2}\frac{L_0}{L_0^2-1}\left[1-\left(\frac{2k-L_0}{L_0}\right)^2\right]. \quad (2)$$

Die Variable $f_S$ bezeichnet dabei die Abtastfrequenz, $z(k)$ den Abtastwert zum Abtastzeitpunkt k, $z^*(k)$ den konjugiert komplexen Abtastwert zum Abtastzeitpunkt k-1 und der Parameter $L_0$ die Anzahl von Abtastwerten (Samples), die für eine Schätzung verarbeitet werden (vgl. U. Mengali, A.N. D'Andrea: Carrier Frequency Recovery with Linear Modulations (Kapitel 3), In: Synchronization Techniques for Digital Receivers, Plenum Press, New York , 1997).

Figur 4 zeigt ein Ablaufdiagramm eines Verfahrens zum Empfang von Funksignalen, bei dem mit Hilfe der Schaltungsanordnungen aus Figur 1 oder 3 adaptiv schmalbandige Störsignale unterdrückt werden.

Zunächst wird die Frequenz $f_S$ des Störsignals IF_S geschätzt, wobei die Lokaloszillatorsignale LO1 und LO2 und somit die Lage des Zwischenfrequenzbands nominale (d.h. vorgegebene Standard-) Werte aufweisen. Aus der geschätzten Störsignalfrequenz $f_S$ kann die Frequenzdifferenz $f_E$ ermittelt werden, was zur Folge hat, dass das im Zwischenfrequenzsignal IF enthaltende Störsignal nicht im Sperrbereich des Notch-Filters liegt. In der Folge werden die Lokaloszillatorfrequenzen $f_{LO1}$ und $f_{LO2}$ um die ermittelte Frequenzdifferenz $f_E$ angepasst, sodass sich das Zwischenfrequenzband um den Frequenzwert $f_E$ verschiebt und das Störsignal IF_S genau im Sperrbereich des Notch-Filters 15 zum liegen kommt.

Im Anschluss kann im Basisband nach dem Nutzsignal (d.h. nach kodierter Information) gesucht werden. Ist diese Suche erfolgreich, können die in dem Nutzsignal enthaltenen Daten empfangen werden. Wenn nicht, wird erneut versucht, die Störsignalfrequenz $f_S$ zu schätzen und das beschriebene Verfahren beginnt von vorne, solange bis ein ordnungsgemäßer Datenempfang möglich ist.

Die Entscheidung, ob eine Anpassung der Lokaloszillatorfrequenzen $f_{LO1}$, $f_{LO2}$ tatsächlich vorgenommen wird kann auch von weiteren (z.B. extern ermittelten) Parametern abhängig gemacht werden. Beispielsweise können der Lokaloszillatorsteuerung "verbotene" Frequenzbereiche vorgegeben werden, in denen auf keinen Fall durch eine Notch-Filterung beeinträchtigt werden sollten. Des Weiteren kann ein Mindestpegel (RSSI-Pegel, RSSI = Received Signal Strength Indicator) vorgegeben werden, den das Störsignal haben muss, um als solches erkannt zu werden.

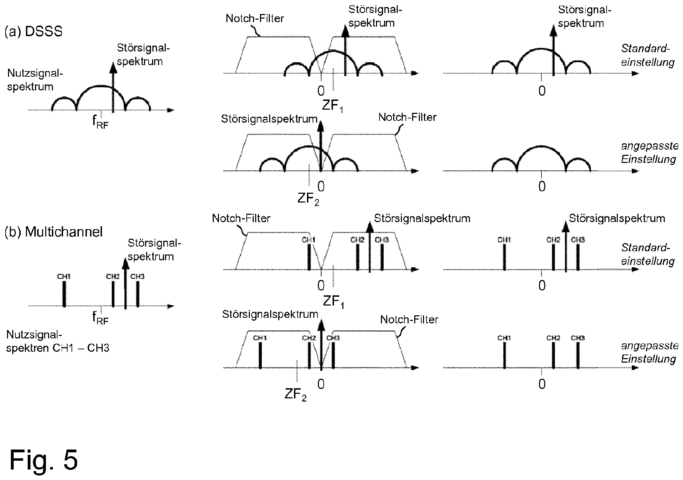

Figur 5 zeigt schematisch die Wirkung der Erfindung anhand eines DSSS-Signals (Fig. 5a) als Nutzsignal und für den Fall mehrerer (schmalbandiger) Nutzsignale unterschiedlicher Kanäle (Fig. 5b). In beiden Fällen ist links das Spektrum des Nutzsignals (bzw. der Nutzsignale mehrerer Kanäle) im Hochfrequenzband, in der Mitte das korrespondierende Spektrum im Zwischenfrequenzband und rechts das resultierende Spektrum im Basisband zu sehen. In beiden Figuren (Fig. 5a und 5b) sind zwei Varianten dargestellt, wobei die erste Variante (Zwischenfrequenzsignal $ZF_1$) jeweils die Lokaloszillatoreinstellung auf nominelle Werte zeigt, und die zweite Variante (Zwischenfrequenzsignal $ZF_1$) den angepassten Zustand, in dem das Störsignalspektrum im Sperrband des Notch-Filters liegt.

In der Standardeinstellung kann das Störsignal nicht durch den Notch-Filter eliminiert werden, da das Störsignalspektrum praktisch irgendwo im Zwischensignal liegen kann und nicht im Sperrband des Notch-Filters liegen muss. Gemäß den beschriebenen Beispielen der Erfindung wird das Zwischenfrequenzsignal durch Anpassung der Lokaloszillatorfrequenzen spektral so verschoben dass das Spektrum des Störsignals genau im Sperrbereich des Notch-Filters zum Liegen kommt. Der Notchfilter ist im vorliegenden Beispiel ein sogenannter DC-Notchfilter, d.h. die Mittenfrequenz ist Null.

Im Folgenden werden einige Aspekte der Erfindung noch einmal zusammengefasst ohne Anspruch auf Vollständigkeit. Ein Beispiel der Erfindung betrifft eine Schaltungsanordnung zur Unterdrückung von Störsignalen mit Hilfe eines Bandsperrfilters. Die Schaltungsanordnung kann folgende Komponenten aufweisen: einen ersten Lokaloszillator 13 und einen zweiten Lokaloszillator 14 zur Erzeugung eines ersten Lokaloszillatorsignals LO1 bzw. eines zweiten Lokaloszillatorsignals LO2 mit jeweils einstellbarer Frequenz $f_{LO1}$ bzw. $f_{LO2}$.; einen ersten Mischer 11 zum Umsetzen eines Hochfrequenzsignals RF_IN in ein korrespondierendes Zwischenfrequenzsignals IF nach Maßgabe des ersten Lokaloszillatorsignals LO1; einen zweiten Mischer 12 zum Umsetzen des Zwischenfrequenzsignals IF in ein korrespondierendes Basisbandsignal OUT nach Maßgabe des zweiten Lokaloszillatorsignals LO1; ein Notch-Filter 15 mit einem durch einen fest vorgegebenen Frequenzgang definierten Sperrbereich; und eine Steuereinheit 10, die dazu ausgebildet ist, die Frequenz $f_S$ eines in dem Zwischenfrequenzsignal IF enthaltenen Störsignals IF_S zu schätzen, und die weiter dazu ausgebildet ist, die Frequenz $f_{LO1}$, $f_{LO2}$ der Lokaloszillatorsignale LO1, LO2 derart an die geschätzte Frequenz $f_S$ des Störsignals IF_S anzupassen, dass die Frequenz $f_S$ des Störsignals in dem Sperrbereich des Notch-Filters 15 liegt. Eine derartige Schaltungsanordnung erlaubt es, ein Notch-Filter mit festem Frequenzgang zu verwenden. Es werden keine im Frequenzgang anpassbare Filter im Zwischenfrequenzband benötigt.

Die Steuereinheit 10 kann einen Frequenzschätzer 101 aufweisen, der dazu ausgebildet ist, die Frequenz $f_S$ eines in dem Zwischenfrequenzsignal IF enthaltenen Störsignals zu schätzen. Sie kann des Weiteren eine Lokaloszillatorsteuerung 102 aufweisen, die dazu ausgebildet ist, die Frequenzdifferenz $f_E$ zwischen der geschätzten Frequenz $f_S$' des Störsignals und der Mittenfrequenz $f_{NM}$ des Sperrbereichs des Notch-Filters 15 zu minimieren (im Idealfall wäre die Differenz dann Null). Dazu passt die Lokaloszillatorsteuerung 102 die Frequenzen der Lokaloszillatorsignale LO1, LO2 entsprechend der ermittelten Frequenzdifferenz $f_E$ an. Die spektrale Lage des Zwischenfrequenzbandes ist folglich variabel und kann so gewählt werden, dass das Störsignal IF_S immer im (fest vorgegebenen) Sperrbereich des Notchfilters 15 liegt.

Die Schaltungsanordnung kann teilweise digital implementiert sein. Zur Digitalisierung des Zwischenfrequenzsignals IF kann in Signalflussrichtung nach dem ersten Mischer 11 ein Analog-Digital-Wandler 16 vorgesehen sein. Beispielsweise sind dann zumindest die Steuereinheit 10, der zweite Mischer 12 und der zweite Lokaloszillator 14 digital implementiert. Dadurch wird der benötigte Hardware-Aufwand weiter reduziert.

Die Schaltungsanordnung kann in einem Funkempfänger Verwendung finden. Dieser kann eine Antenne und eine mit der Antenne verbundene Hochfrequenzempfangsschaltung aufweisen, die das von der Antenne empfangenes Antennensignal als Hochfrequenzsignal RF_IN für die Schaltungsanordnung bereitstellt. Insbesondere bei Spread-Spektrum-Empfängern ist eine Unterdrückung von schmalbandigen Störsignalen im Zwischenfrequenzband zur Verbesserung des Signal-Rausch-Abstandes im Basisbandsignal sinnvoll. In diesem Fall kann das empfangene Hochfrequenzsignal RF_IN ein breitbandiges, moduliertes Spreizspektrumsignal sein. Der Funkempfänger kann in diesem Fall eine Einheit zum Entspreizen des Basisbandsignals OUT aufweisen. Bandspreiz-Übertragungsverfahren können beispielsweise bei schlüssellosen Zugangssystemen, insbesondere im Automobilbereich, Anwendung finden.

Ein weiteres Beispiel der Erfindung betrifft ein Verfahren zum Empfangen eines Hochfrequenzsignals. Das Verfahren weist folgendes auf: Umsetzen des Hochfrequenzsignals RF_IN aus einem Hochfrequenzband in ein Zwischenfrequenzband durch Mischen des Hochfrequenzsignals mit einem ersten Lokaloszillatorsignal LO1 um so ein korrespondierendes Zwischenfrequenzsignal IF zu erhalten; Schätzen einer Störsignalfrequenz $f_S$ eines in dem Zwischenfrequenzsignal IF enthaltenen Störsignals IF_S; Filtern des Zwischenfrequenzsignals IF mit einem Notch-Filter 15 mit einem fest vorgebbaren Sperrbereich; und Anpassen der Frequenzen des Lokaloszillatorsignals LO1 an die geschätzte Frequenz $f_S$ des Störsignals derart, dass die Frequenz $f_S$ des Störsignals in dem Sperrbereich des Notch-Filters liegt. Die Filtercharakteristik des Notch-Filters 15 kann bei diesem Verfahren fest vorgegeben werden und muss nicht adaptiv an das Störsignal angepasst werden. Die Frequenzschätzung kann insbesondere im Zwischenfrequenzband vorgenommen werden. Es ist jedoch auch eine Frequenzschätzung im Basisband oder im Hochfrequenzbereich möglich. Die Filterung selbst erfolgt jedoch im Zwischenfrequenzband.

Das Verfahren kann weiter das Umsetzen des Zwischenfrequenzsignals IF aus dem Zwischenfrequenzband in ein Basisband mit einem zweiten Lokaloszillatorsignal LO2 aufweisen, um so ein korrespondierendes Basisbandsignal OUT zu erhalten. In dem Basisband kann dann nach einem Nutzsignal gesucht werden und die in dem Nutzsignal enthaltenen Daten können empfangen werden, sofern ein Nutzsignal gefunden wurde. Wird kein Nutzsignal gefunden, können die obigen Verfahrensschritte solange wiederholt werden, bis ein Nutzsignal detektiert wird. Im Falle einer Spread-Spectrum-Übertragung umfasst das Suchen nach dem Nutzsignal das Entspreizen des Basisbandsignals mit einer bekannten Spreizsequenz. Eine teilweise digitale Implementierung des Verfahrens ist möglich. Beispielsweise kann das Zwischenfrequenzsignal IF vor oder nach dem Filtern mit dem Notch-Filter 15 digitalisiert werden.

Sämtliche gezeigten Anordnungen können als reine Hardware- oder reine Software-Applikationen oder als einer Mischung aus beidem realisiert werden. Die Hardware kann bedarfsweise analog, digital oder gemischt analog-digital ausgeführt werden.

Bezugszeichenliste

| | |
|---|---|
| 10 | Steuereinheit |
| 101 | Störfrequenzschätzer |
| 102 | Lokaloszillatorsteuerung |
| 11 | Mischer |
| 12 | Mischer (Multiplizierer) |
| 13 | Lokaloszillator |
| 14 | Lokaloszillator |
| 15 | Notch-Filter |
| 16 | Analog/Digital-Wandler |
| 17 | Anti-Aliasing-Filter |
| RF_IN | Hochfrequenz-Eingangssignal |
| IF | Zwischenfrequenzsignal |
| IF_N | Nutzsignal im Zwischenfrequenzband |
| IF_S | Störsignal im Zwischenfrequenzband |
| OUT | Basisbandsignal |
| $f_{LO1}$, $f_{LO2}$ | Frequenzen der Lokaloszillatoren 13 bzw. 14 |
| $f_S$ | Störsignalfrequenz |
| $f_E$ | Frequenzdifferenz |
| $f_{NM}$ | Notch-Filter-Mittenfrequenz |
| LO1 | Lokaloszillatorsignal mit Frequenz $f_{LO1}$ |
| LO2 | Lokaloszillatorsignal mit Frequenz $f_{LO2}$ |
| OSC_CTRL$_1$ | Steuersignal für Lokaloszillator 13 |
| OSC_CTRL$_2$ | Steuersignal für Lokaloszillator 14 |

**Patentansprüche**

1. Schaltungsanordnung zur Unterdrückung von Störsignalen mit Hilfe eines Bandsperrfilters; die Schaltungsanordnung weist folgendes auf:

einen ersten Lokaloszillator (13) und einen zweiten Lokaloszillator zur Erzeugung eines ersten Lokaloszillatorsignals (LO1) bzw. eines zweiten Lokaloszillatorsignals (LO2) mit jeweils einstellbarer Frequenz;
einen ersten Mischer (11) zum Umsetzen eines Hochfrequenzsignals (RF_IN) in ein korrespondierendes Zwischenfrequenzsignals (IF) nach Maßgabe des ersten Lokaloszillatorsignals (LO1) mit einstellbarer Frequenz;
einen zweiten Mischer (12) zum Umsetzen des Zwischenfrequenzsignals (IF) in ein korrespondierendes Basisbandsignal (OUT) nach Maßgabe des zweiten Lokaloszillatorsignals (LO2) mit einstellbarer Frequenz;
ein Notch-Filter (15) mit einem durch einen fest vorgegebenen Frequenzgang definierten Sperrbereich, welches dazu ausgebildet ist, das Zwischenfrequenzsignal (IF) zu filtern;
einer Steuereinheit (10), die dazu ausgebildet ist, die Frequenz ($f_S$) eines in dem Zwischenfrequenzsignal (IF) enthaltenen Störsignals zu schätzen, und die weiter dazu ausgebildet ist, die Frequenz der Lokaloszillatorsignale (LO1, LO2) derart an die geschätzte Frequenz ($f_S$) des Störsignals anzupassen, dass die Frequenz ($f_S$) des Störsignals in dem Sperrbereich des Notch-Filters liegt.

2. Schaltungsanordnung nach Anspruch 1 bei dem die Steuereinheit (10) aufweist:

einen Frequenzschätzer (101), der dazu ausgebildet ist, die Frequenz ($f_S$) eines in dem Zwischenfrequenzsignal (IF) enthaltenen Störsignals zu schätzen, und
eine Lokaloszillatorsteuerung (102), die dazu ausgebildet ist, die Frequenzdifferenz ($f_E$) zwischen der geschätzten Frequenz ($f_S$) und der Mittenfrequenz des Sperrbereichs des Notch-Filters (15) zu ermitteln, und die Frequenzen der Lokaloszillatorsignale (LO1, LO2) entsprechend der ermittelten Frequenzdifferenz ($f_E$) anzupassen.

3. Schaltungsanordnung nach Anspruch 1 oder 2,

die zur Digitalisierung des Zwischenfrequenzsignals (IF) in Signalrichtung nach dem ersten Mischer (11) einen Analog-Digital-Wandler (16) aufweist, und

bei der zumindest die Steuereinheit (10), der zweite Mischer (12) und der zweite Lokaloszillator (14) digital implementiert sind.

4.  Schaltungsanordnung nach einem der Ansprüche 1 bis 3, die zusätzlich aufweist:
eine Antenne und eine mit der Antenne verbundene Hochfrequenzempfangsschaltung, die als Hochfrequenzsignal (RF_IN) ein von der Antenne empfangenes Antennensignal bereitstellt.

5.  Schaltungsanordnung nach einem der Ansprüche 1 bis 4, bei der das empfangene Hochfrequenzsignal (RF_IN) ein breitbandiges, moduliertes Spreizspektrumsignal ist und die weiter eine Einheit zum Entspreizen des Basisbandsignals (OUT) aufweist.

6.  Verfahren zum Empfangen eines Hochfrequenzsignals, das folgendes aufweist:

Umsetzen des Hochfrequenzsignals (RF_IN) aus einem HF-Band in ein Zwischenfrequenz-Band durch Mischen des Hochfrequenzsignals mit einem ersten Lokaloszillatorsingal (LO1) um so ein korrespondierendes Zwischenfrequenzsignal (IF) zu erhalten;

Schätzen einer Störsignalfrequenz ($f_S$) eines in dem Zwischenfrequenzsignal (IF) enthaltenen Störsignals;

Filtern des Zwischenfrequenzsignals (IF) mit einem Notch-Filter (15) mit einem Sperrbereich;

Anpassen der Frequenz des Lokaloszillatorsignals (LO1) an die geschätzte Frequenz ($f_S$) des Störsignals derart, dass die Frequenz ($f_S$) des Störsignals in dem Sperrbereich des Notch-Filters liegt; und

Umsetzen des Zwischenfrequenzsignals (IF) aus dem Zwischenfrequenzband in ein Basisband mit einem zweiten Lokaloszillatorsingal (LO2), um so ein korrespondierendes Basisbandsignal (OUT) zu erhalten.

7.  Verfahren gemäß Anspruch 6, das weiter aufweist:

Suchen nach einem Nutzsignal in dem Basisbandsignal (OUT); und

Empfangen der in dem Nutzsignal enthaltenen Daten, wenn ein Nutzsignal gefunden wurde.

8.  Verfahren gemäß Anspruch 7, das weiter aufweist:
Wiederholen der vorhergehenden Verfahrensschritte, wenn kein Nutzsignal gefunden wurde.

9.  Verfahren gemäß Anspruch 7 oder 8, bei dem das Suchen nach einem Nutzsignal in dem Basisbandsignal (OUT) umfasst:
Entspreizen des Basisbandsignals mit einer bekannten Spreizsequenz.

10. Verfahren nach einem der Ansprüche 6 bis 9, bei dem das Zwischenfrequenzsignal (IF) vor oder nach dem Filtern mit dem Notch-Filter (15) digitalisiert wird.

11. Verfahren nach einem der Ansprüche 6 bis 10, bei dem das Notch-Filter (15) während des Schätzens der Störsignalfrequenz ($f_S$) inaktiv ist.

**Claims**

1.  Circuit arrangement for suppressing interference signals with the aid of a band-stop filter; the circuit arrangement has the following:

a first local oscillator (13) and a second local oscillator for generating a first local oscillator signal (L01) and a second local oscillator signal (LO2), respectively, with a respectively adjustable frequency;
a first mixer (11) for converting a radio-frequency signal (RF_IN) into a corresponding intermediate-frequency signal (IF) as determined by the first local oscillator signal (L01) with adjustable frequency;
a second mixer (12) for converting the intermediate-frequency signal (IF) into a corresponding baseband signal (OUT) as determined by the second local oscillator signal (LO2) with adjustable frequency;
a notch filter (15) having a stop band defined by a predetermined frequency response, which filter is designed for filtering the intermediate-frequency (IF);
a control unit (10) which is designed for estimating the frequency ($f_S$) of an interference signal contained in the intermediate-frequency signal (IF) and which is also designed for adapting the frequency of the local oscillator signals (L01, LO2) to the estimated frequency ($f_S$) of the interference signal in such a manner that the frequency ($f_S$) of the interference signal lies within the stop band of the notch filter.

2.  Circuit arrangement according to Claim 1, in which the control unit (10) has:

a frequency estimator (101) which is designed for estimating the frequency ($f_S$) of an interference signal contained in the intermediate-frequency signal (IF), and
a local oscillator control (102) which is designed for determining the frequency difference ($f_E$) between the estimated frequency ($f_S$) and the center frequency of the stop band of the notch filter (15) and adapting the frequencies of the local oscillator signals (LO1, LO2) in accordance with the frequency difference ($f_E$) determined.

3. Circuit arrangement according to Claim 1 or 2, which has an analog/digital converter (16) after the first mixer (11) in the direction of signal for digitizing the intermediate-frequency signal (IF), and
in which at least the control unit (10), the second mixer (12) and the second local oscillator (14) are implemented digitally.

4. Circuit arrangement according to one of Claims 1 to 3, which has additionally:
an antenna and a radio-frequency receiving circuit connected to the antenna, which provides as radio-frequency signal (RF_IN) an antenna signal received from the antenna.

5. Circuit arrangement according to one of Claims 1 to 4, in which the received radio-frequency signal (RF IN) is a wideband, modulated spread-spectrum signal and which also has a unit for despreading the baseband signal (OUT).

6. Method for receiving a radio-frequency signal which comprises the following:

converting the radio-frequency signal (RF_IN) from an RF band into an intermediate-frequency band by mixing the radio-frequency signal with a first local oscillator signal (L01) in order to thus obtain a corresponding intermediate-frequency signal (IF);
estimating an interference signal frequency ($f_S$) of an interference signal contained in the intermediate-frequency signal (IF);
filtering the intermediate-frequency signal (IF) with a notch filter (15) having a stop band;
adapting the frequency of the local oscillator signal (L01) to the estimated frequency ($f_S$) of the interference signal in such a manner that the frequency ($f_S$) of the interference signal lies within the stop band of the notch filter; and
converting the intermediate-frequency signal (IF) from the intermediate-frequency band into a baseband by means of a second local oscillator signal (LO2) in order to thus obtain a corresponding baseband signal (OUT).

7. Method according to Claim 6, which also comprises:

searching for a useful signal in the baseband signal (OUT); and
receiving the data contained in the useful signal when a useful signal has been found.

8. Method according to Claim 7, which also comprises:
repeating the preceding method steps when no useful signal has been found.

9. Method according to Claim 7 or 8, in which the searching for a useful signal in the baseband signal (OUT) comprises:
despreading the baseband signal by means of a known spreading sequence.

10. Method according to one of Claims 6 to 9, in which the intermediate-frequency signal (IF) is digitized before or after the filtering with the notch filter (15).

11. Method according to one of Claims 6 to 10, in which the notch filter (15) is inactive during the estimating of the interference-signal frequency ($f_S$).

## Revendications

1. Arrangement de circuit pour supprimer les signaux parasites à l'aide d'un filtre coupe-bande ; l'arrangement de circuit possédant ce qui suit :

un premier oscillateur local (13) et un deuxième oscillateur local servant à générer un premier signal d'oscillateur local (LO1) ou un deuxième signal d'oscillateur local (LO2) ayant respectivement une fréquence réglable ;
un premier mélangeur (11) destiné à convertir un signal à haute fréquence (RF_IN) en un signal à fréquence intermédiaire (IF) correspondant conformément au premier signal d'oscillateur local (LO1) à fréquence réglable ;
un deuxième mélangeur (12) destiné à convertir le signal à fréquence intermédiaire (IF) en un signal en bande de base (OUT) correspondant conformément au deuxième signal d'oscillateur local (LO2) à fréquence réglable ;
un filtre coupe-bande (15) ayant une page de blocage définie par une réponse en fréquence prédéfinie fixe, lequel est configuré pour filtrer le signal à fréquence intermédiaire (IF) ;
une unité de commande (10) qui est configurée pour estimer la fréquence ($f_s$) d'un signal parasite contenu dans le signal à fréquence intermédiaire (IF) et qui est en outre configurée pour adapter la fréquence des signaux d'oscillateur local (LO1, LO2) à la fréquence ($f_s$) estimée du signal parasite de telle sorte que la fréquence ($f_s$) du signal parasite se trouve dans la plaque de blocage du filtre coupe-bande.

2. Arrangement de circuit selon la revendication 1, avec lequel l'unité de commande (10) possède :

un estimateur de fréquence (101) qui est configuré pour estimer la fréquence ($f_s$) d'un signal parasite contenu dans le signal à fréquence intermédiaire (IF), et

une commande d'oscillateur local (102) qui est configurée pour déterminer la différence de fréquence ($f_E$) entre la fréquence ($f_s$) estimée et la fréquence centrale de la plage de blocage du filtre coupe-bande (15) et adapter les fréquences des signaux d'oscillateur local (LO1, LO2) en fonction de la différence de fréquence ($f_E$) estimée.

3. Arrangement de circuit selon la revendication 1 ou 2, lequel possède, dans le sens du signal après le premier mélangeur (11), un convertisseur analogique/numérique (16) destiné à la numérisation du signal à fréquence intermédiaire (IF), et
avec lequel l'au moins une unité de commande (10), le deuxième mélangeur (12) et le deuxième oscillateur local (14) sont mis en oeuvre sous forme numérique.

4. Arrangement de circuit selon l'une des revendications 1 à 3, lequel possède en outre :
une antenne et un circuit de réception de hautes fréquences relié à l'antenne, lequel délivre sous la forme d'un signal à haute fréquence (RF_IN) le signal d'antenne reçu par l'antenne.

5. Arrangement de circuit selon l'une des revendications 1 à 4, avec lequel le signal à haute fréquence (RF_IN) reçu est un signal à spectre étalé modulé à haute fréquence et lequel possède en outre une unité servant à supprimer l'étalement du signal en bande de base (OUT).

6. Procédé de réception d'un signal à haute fréquence, comprenant les étapes suivantes :

conversion du signal à haute fréquence (RF_IN) d'une bande HF en une bande de fréquences intermédiaires par mélange du signal à haute fréquence avec un premier signal d'oscillateur local (LO1) afin d'obtenir ainsi un signal à fréquence intermédiaire (IF) correspondant ;
estimation d'une fréquence de signal parasite ($f_s$) d'un signal parasite contenu dans le signal à fréquence intermédiaire (IF) ;
filtrage du signal à fréquence intermédiaire (IF) avec un filtre coupe-bande (15) ayant une plage de coupure ;
adaptation de la fréquence du signal d'oscillateur local (LO1) à la fréquence ($f_s$) estimée du signal parasite de telle sorte que la fréquence ($f_s$) du signal parasite se trouve dans la plaque de blocage du filtre coupe-bande ; et
conversion du signal à fréquence intermédiaire (IF) de la bande de fréquences intermédiaires en une bande de base avec un deuxième signal d'oscillateur local (LO2) afin d'obtenir ainsi un signal en bande de base (OUT) correspondant.

7. Procédé selon la revendication 6, qui comprend en outre :

recherche d'un signal utile dans le signal en bande de base (OUT) ; et
réception des données contenues dans le signal utile lorsqu'un signal utile a été trouvé.

8. Procédé selon la revendication 7, qui comprend en outre :
répétition des étapes précédentes du procédé si aucun signal utile n'a été trouvé.

9. Procédé selon la revendication 7 ou 8, selon lequel la recherche d'un signal utile dans le signal en bande de base (OUT) comprend :
suppression de l'étalement du signal en bande de base avec une séquence d'étalement connue.

10. Procédé selon l'une des revendications 6 à 9, selon lequel le signal à fréquence intermédiaire (IF) est numérisé avant ou après le filtrage avec le filtre coupe-bande (15).

11. Procédé selon l'une des revendications 6 à 10, selon lequel le filtre coupe-bande (15) est inactif pendant l'estimation de la fréquence de signal parasite ($f_s$).

HF-Band        ZF-Band (variabel)        Basisband

RF_IN      $IF=IF\_N+IF\_S\ (f_S)$     Notch-filter 15      OUT

Mischer 11         Mischer 12

Steuereinheit 10    $f_{NM}$

$LO1\ (f_{LO_1})$         $LO2\ (f_{LO_2})$

Lokaloszillator 13    $OSC\_CTRL_1$    $OSC\_CTRL_2$    Lokaloszillator 14

# Fig. 1

IF        Steuereinheit 10

Störfrequenzschätzer 101

$f_E$

Lokaloszillator-steuerung 102     Notchfilter-mittenfrequenz $f_{NM}$

$OSC\_CTRL_{1,2}$

# Fig. 2

**HF-Band (analog)**      **ZF-Band (analog /digital)**      **Basisband (digital)**

RF_IN → Mischer 11 (komplexwertig) → AAF 17 → ADC 16 → IF → Notch-Filter 15 → Multiplizierer 12 (spektrale Verschiebung) → OUT

$LO1=e^{2\pi \cdot j \cdot f_{LO1} \cdot t}$

$LO2=e^{2\pi \cdot j \cdot f_{LO2} \cdot t}$

Steuereinheit 10

Lokaloszillator 13    $OSC\_CTRL_1$    $OSC\_CTRL_2$    Lokaloszillator 14 (digitaler Oszillator, NCO)

## Fig. 3

Start mit nominalen Parametern der Lokaloszillatoren LO13/LO14

↓

Frequenzschätzung (des stärksten Signals in der ZF)

*Frequenzdifferenz fE*

↓

Vorgaben →
andere Parameter → Festlegung der durchzuführenden LO-Frequenzänderungen

*LO-Ziel-Frequenzen*

↓

Änderung der LO-Frequenzen

↓

Nutzsignalsuche im Basisband (Synchronisationsversuch)

↓

◇ — Synchronisation nicht erfolgreich →

*Synchronisation erfolgreich*

↓

Datenempfang

## Fig. 4

(a) DSSS

Nutzsignalspektrum

Störsignalspektrum

$f_{RF}$

Notch-Filter

Störsignalspektrum

0

$ZF_1$

Störsignalspektrum

Notch-Filter

0

$ZF_2$

Störsignalspektrum

0

*Standardeinstellung*

0

*angepasste
Einstellung*

(b) Multichannel

CH1

CH2 CH3

$f_{RF}$

Nutzsignalspektren CH1 – CH3

Störsignalspektrum

Notch-Filter

CH1

CH2 CH3

0

$ZF_1$

Störsignalspektrum

Störsignalspektrum

Notch-Filter

CH1 CH2 CH3

0

$ZF_2$

Störsignalspektrum

CH1

CH2 CH3

0

*Standardeinstellung*

Störsignalspektrum

CH1

CH2 CH3

0

*angepasste
Einstellung*

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7706769 B
- EP 0372369 A2
- US 2002054651 A1

**In der Beschreibung aufgeführte Nicht-Patentliteratur**

- Carrier Frequency Recovery with Linear Modulations. **U. MENGALI ; A.N. D'ANDREA.** Synchronization Techniques for Digital Receivers. Plenum Press, 1997